# EUROPEAN PATENT APPLICATION

(11) **EP 2 778 033 A1**
(43) Date of publication of application: **17.09.2014**
(21) Application number: 14160071.8
(22) Date of filing: 14.03.2014
(51) Int. Cl.: B62L 3/02, B62K 23/06

(54) **Adjustable hand lever for vehicle control**

(30) Priority: 15.03.2013 US 201361794771 P
(71) Applicant: HB Performance Systems, Inc., Mequon, WI 53092 (US)
(72) Inventor: Holland, Randall, Mequon, WI Wisconsin WI 53092 (US); Gorsline, Andrea, Mequon, WI Wisconsin WI 53092 (US)
(74) Representative: Beattie, Alex Thomas Stewart

(57) **Abstract**

A hand control assembly (18) comprising a base (20), an actuating mechanism (52) movable relative to the base (20), a hub (40) pivotally coupled to the base (20) and positioned to move the actuating mechanism (52, a lever arm (42)pivotally movable relative to the hub (40) for movement about a pivot axis (58), and an adjusting mechanism (44) positioned between the lever arm (42) and the hub (40) and adapted to adjust a space between the lever arm (42) and a handlebar (16). The adjusting mechanism (44)includes a dial (70) mounted for rotation about an adjusting axis (74) angled relative to the pivot axis (58). The dial (70) and the lever arm (42) cooperatively define a dimension corresponding with the dial (70) protruding from the lever arm (42), and it is preferred that this dimension does not change when the dial (70) is rotated from a short-reach position to a long-reach position. The dial (70) can be mounted for rotation about the adjusting axis (74) that is offset from an engaging member (54).

## Description

### BACKGROUND

The present invention relates generally to vehicles having hand-operated control levers, such as snowmobiles and ATVs, and more specifically to control levers with adjustable reach.

Standard levers for handlebar controls have a hand grip area (the blade), a pivot point and a contact point for actuating the mechanism (e.g., a piston or pushrod). Typically, these levers are used to control brakes and clutches.

Adjustable reach levers are readily available in the marketplace. However, current adjustable reach levers tend to be complex and expensive to produce.

### SUMMARY

The present invention provides a vehicle comprising a wheel, a seat supported by the wheel, a handlebar supported by the wheel, and a hand control assembly mounted in the handlebar. The hand control assembly comprises a base, an actuating mechanism movable relative to the base, a hub pivotally coupled to the base and positioned to move the actuating mechanism, a lever arm pivotally movable relative to the hub for movement about a pivot axis, and an adjusting mechanism positioned between the lever arm and the hub and adapted to adjust a space between the lever arm and the handlebar. The adjusting mechanism includes a dial (e.g., having a knurled edge) mounted for rotation about an adjusting axis angled (e.g., perpendicular) relative to the pivot axis. In one embodiment, the dial is mounted on the lever arm for rotation between a short-reach position and a long-reach position. In this embodiment, the dial and the lever arm cooperatively define a dimension corresponding with the dial protruding from the lever arm, and it is preferred that this dimension does not change when the dial is rotated from the short-reach position to the long-reach position.

The adjusting mechanism can further include an engaging member, and the dial can be mounted for rotation about an adjusting axis that is offset from the engaging member. The adjusting mechanism can also include an axle rotationally engaging the lever arm and coupled to the dial to facilitate rotation of the dial relative to the lever arm.

Preferably, the dial includes circumferentially-spaced zones of variable thickness that facilitate adjustment of a space between the lever arm and the hub. Preferably, the zones comprise a first recess and a second recess, the first recess having a depth different a depth of the second recess. The zones can further comprise a third recess (or more) having a depth different the depths of the first and second recesses.

Other aspects of the invention will become apparent by consideration of the detailed description and accompanying drawings.

### BRIEF DESCRIPTION OF THE DRAWINGS

Fig. 1 is an All Terrain Vehicle (ATV) having a hand control embodying the present invention.
Fig. 2 is an enlarged perspective view of the hand control of Fig. 1, including a base and an adjustable lever assembly.
Fig. 3 is an exploded perspective view of the hand control of Fig. 2.
Fig. 4 is a section view taken along line 4-4 in Fig. 2 with the lever assembly in a long-reach position.
Fig. 5 is the view of Fig. 4 with the lever assembly in a short-reach position.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

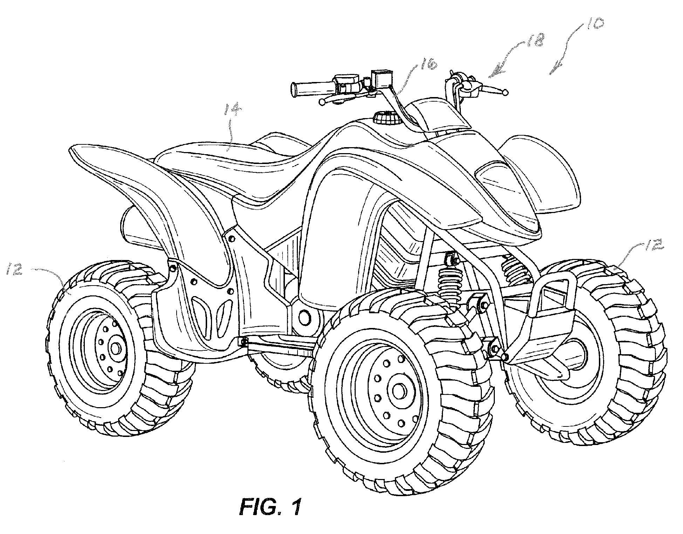

Fig. 1 illustrates an ATV 10 having wheels 12, a seat 14, and handlebars 16 for steering the ATV 10. The ATV 10 further includes a hand control 18 that provides an adjustable reach. The concept of the present invention can be applied to a variety of different hand controls, such as brake levers and clutch levers.

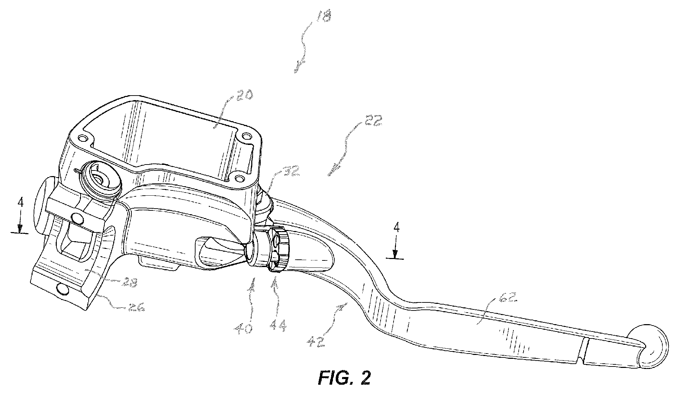

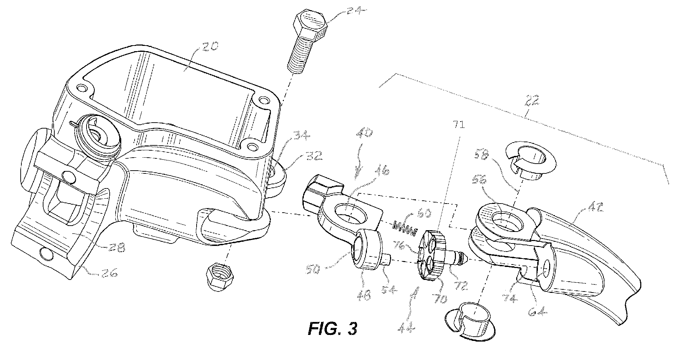

Figs. 2-3 illustrate the hand control 18 in more detail. The hand control 18 includes a base 20, a lever assembly 22, and a fastener 24 pivotally securing the lever assembly 22 to the base 20. The base 20 includes a mounting portion 26 having a semicylindrical recess 28 that facilitates securing the base 20 to the handlebars 16 using an appropriate clamping mechanism, as is known in the art. The base 20 further includes a support portion 32 having a first opening 34 dimensioned to receive the fastener 24 to facilitate pivotally supporting the lever assembly 22.

The lever assembly 22 includes a hub 40, a lever arm 42, and an adjusting mechanism 44 positioned between the hub 40 and the lever arm 42. The hub 40 includes a second opening 46 aligned with the first opening 34 to facilitate pivoting of the hub 40 relative to the base 20. The hub 40 further includes an actuating arm 48 having a recess 50 adapted to receive an end of an actuating mechanism 52, such as a hydraulic piston/rod for a clutch or brake system. The actuating arm 48 further includes an engaging member 54 adapted to receive a force from the lever arm 42 via the adjusting mechanism 44.

The lever arm 42 includes a third opening 56 aligned with the first and second openings 34, 46 to facilitate pivoting of the lever arm 42 relative to each of the hub 40 and the base 20 about a pivot axis 58. A biasing member in the form of a compression spring 60 is positioned between the hub 40 and the lever arm 42 to bias the lever arm 42 toward the handlebars 16 and toward the engaging member 54. The lever arm 42 further includes a blade 62 adapted to be engaged by a user's hand, as is known in the art. A cylindrical recess 64 in the lever arm 42 is dimensioned to receive the adjusting mechanism 44, as described below in more detail.

The adjusting mechanism 44 includes a rotary dial 70 having a knurled edge 71 and a cylindrical axle 72 positioned in the cylindrical recess 64 of the lever arm 42 to facilitate rotation of the dial 70 relative to the lever arm 42 about an adjusting axis 74. The illustrated adjusting axis 74 is offset from (i.e., does not intersect) the engaging member 54, angled (i.e., non-parallel to) the pivot axis 58, and is perpendicular to the pivot axis 58. In the illustrated embodiment, the dial 70 is sandwiched between the lever arm 42 and the engaging member 54 of the hub 40.

The dial 70 includes a series of circumferentially-spaced recesses 76, each of which is dimensioned to receive the engaging member 54 when the dial 70 is in a particular rotational position. These recesses defines circumferentially-spaced zones of variable thickness. That is, the dial 70 can be rotated to multiple discrete rotational positions, each of which will position a particular recess 76 in alignment with the engaging member 54. Each of the recesses 76 in dial 70 has a different depth that will result in the lever arm 42 being positioned at a different distance from the handlebar 16. The compression spring 60 biases the dial 70 into engagement with the engaging member 54.

The recesses 76 are dimensioned to receive the engaging member 54 in such a manner that the dial 70 is substantially prevented from rotating when the engaging member 54 is positioned in one of the recesses 76. In this manner, the dial 70 is substantially prevent from rotating to a different position unless the lever arm 42 is deliberately moved away from the handlebar 16 to disengage the engaging member 54 from the recess 76.

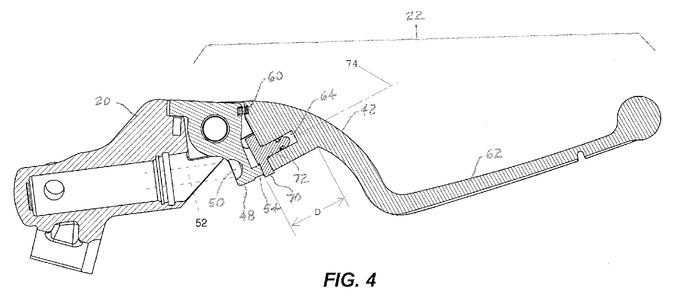

Figure 4 illustrates the lever assembly 22 with the dial 70 in a long-reach position. In this position, the shallowest recess 76 of the dial 70 is aligned with and receives the engaging member 54 of the hub 40. In this position, the dial 70 is in its furthest position from the actuating arm 48 of the hub 40, resulting in the blade 62 of the lever arm 42 in its furthest position from the handlebars.

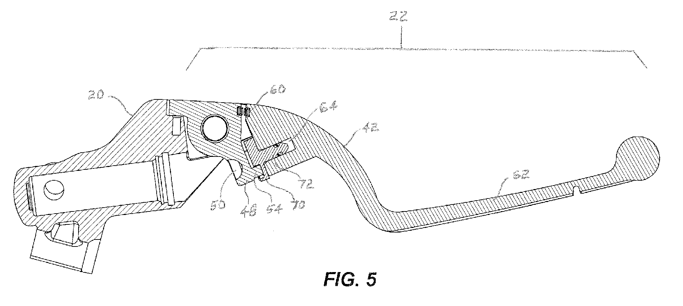

Figure 5 illustrates the lever assembly 22 with the dial 70 in a short-reach position. In this position, the deepest recess 76 of the dial 70 is aligned with and receives the engaging member 54 of the hub 40. In this position, the dial 70 is in its closest position to the actuating arm 48 of the hub 40, resulting in the blade 62 of the lever arm 42 in its closest position to the handlebars. Additional position between the long-reach position and the short-reach position can be obtained by aligning other recesses 76 with the engaging member 54 of the hub 40.

It should be noted that rotation of the dial 70 of the adjusting mechanism 44 does not change the overall profile of the combination of the dial 70 and lever arm 42. That is, a longitudinal dimension D of the dial 70 protruding from the lever arm 42 does not change when the dial is rotated from the long-reach position (Fig. 4) to the short-reach position (Fig. 5). The only positional change between the dial 70 and the lever arm 42 relates to the relative rotational position.

As a result of the illustrated and described arrangement, the position of the lever arm 42 relative to the handlebars 16 can be adjusted as follows. First, the blade 62 of the lever arm 42 is moved away from the handlebars 16 by compressing the spring 60, thereby disengaging the rotary dial 70 from the engaging member 54 of the hub 40. The rotary dial 70 can then be rotated to a different position such that a different recess 76 in the dial 70 is aligned with the engaging member 54 of the hub 40. A deeper recess 76 will result in the blade 62 of the lever arm 42 being closer to the handlebars 16, and a shallower recess 76 will result in the blade 62 of the lever arm 42 being further from the handlebars 16.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Various features and advantages of the invention are set forth in the following claims.

## Claims

1. A hand control assembly comprising:
a base;
an actuating mechanism movable relative to the base;
a hub pivotally coupled to the base and positioned to move the actuating mechanism;
a lever arm pivotally movable relative to the hub for movement about a pivot axis; and
an adjusting mechanism positioned between the lever arm and the hub and adapted to adjust a space between the lever arm and the hub to thereby adjust the position of the lever arm relative to the base, the adjusting mechanism including a dial mounted for rotation about an adjusting axis angled relative to the pivot axis.

2. A hand control assembly as claimed in claim 1, wherein the adjusting mechanism further includes an engaging member and wherein the dial is mounted for rotation about an adjusting axis that is offset from the engaging member.

3. A hand control assembly as claimed in claim 1 or 2, wherein the adjusting axis is perpendicular to the pivot axis.

4. A hand control assembly as claimed in claims 1-3, wherein the adjusting mechanism further includes an axle rotationally engaging the lever arm and coupled to the dial to facilitate rotation of the dial relative to the lever arm.

5. A hand control assembly as claimed in claims 1-4, wherein the dial includes circumferentially-spaced zones of variable thickness that facilitate adjustment of a space between the lever arm and the hub.

6. A hand control assembly as claimed in claim 5, wherein the zones comprise a first recess and a second recess, the first recess having a depth different the a depth of the second recess; and preferably wherein the zones further comprise a third recess having a depth different the depths of the first and second recesses.

7. A hand control assembly as claimed in claims 1-6, wherein the dial includes a knurled edge

8. A hand control assembly as claimed in claim 1-7, wherein the dial is mounted on the lever arm for rotation between a short-reach position and a long-reach position, wherein the dial and the lever arm cooperatively define a dimension D corresponding with the dial protruding from the lever arm, and wherein the dimension D does not change when the dial is rotated from the short-reach position to the long-reach position.

9. A vehicle comprising:
a wheel;
a seat supported by the wheel;
a handlebar supported by the wheel; and
a hand control assembly mounted in the handlebar and comprising:
a base;
an actuating mechanism movable relative to the base;
a hub pivotally coupled to the base and positioned to move the actuating mechanism;
a lever arm pivotally movable relative to the hub for movement about a pivot axis; and
an adjusting mechanism positioned between the lever arm and the hub and adapted to adjust a space between the lever arm and the handlebar, the adjusting mechanism including a dial mounted for rotation about an adjusting axis angled relative to the pivot axis.

10. A vehicle as claimed in claim 9, wherein the adjusting mechanism further includes an engaging member and wherein the dial is mounted for rotation about an adjusting axis that is offset from the engaging member; and preferably wherein the adjusting axis is perpendicular to the pivot axis.

11. A vehicle as claimed in claims 9-10, wherein the adjusting mechanism further includes an axle rotationally engaging the lever arm and coupled to the dial to facilitate rotation of the dial relative to the lever arm.

12. A vehicle as claimed in claims 9-11, wherein the dial includes circumferentially-spaced zones of variable thickness that facilitate adjustment of a space between the lever arm and the hub.

13. A vehicle as claimed in claim 12, wherein the zones comprise a first recess and a second recess, the first recess having a depth different a depth of the second recess; and preferably wherein the zones further comprise a third recess having a depth different the depths of the first and second recesses.

14. A vehicle as claimed in claims 9-13, wherein the dial includes a knurled edge

15. A vehicle as claimed in claim 9-14, wherein the dial is mounted on the lever arm for rotation between a short-reach position and a long-reach position, wherein the dial and the lever arm cooperatively define a dimension corresponding with the dial protruding from the lever arm, and wherein the dimension does not change when the dial is rotated from the short-reach position to the long-reach position.
